# EUROPEAN PATENT APPLICATION

(11) **EP 0 672 977 A1**
(43) Date of publication of application: **20.09.1995**
(21) Application number: 95830035.2
(22) Date of filing: 14.02.1995
(51) Int. Cl.: G05D 16/06

(54) **Gas cock with integrated system for manual adjustment and self-stabilization of pressure**

(30) Priority: 17.03.1994 IT BS940024
(71) Applicant: NOVA COMET S.r.l., I-25030 Torbole Casaglia (Brescia) (IT)
(72) Inventor: Ravazzolo, Romano, I-25100 Brescia (IT)
(74) Representative: Manzoni, Alessandro

(57) **Abstract**

A gas cock comprising a valve opening/closing an intermediate passage between a gas inlet hole and a gas outlet hole. Between the intermediate passage and the outlet hole a pressure adjustment compartment is located including a means (27) for measuring gas pressure rigidly connected and movable together with the valve (21) in response both to a manual control and to the change in pressure of the gas directed to the outlet.

## Description

The present invention relates to cocks for gas appliances and more particularly a cock with an improved system to adjust/stabilize gas outlet pressure.

Generally, in gas combustion appliances, the flame is adjusted by means of a cock which permits adjusting the flow rate of the combustible gas which, through one or more calibrated nozzles, introduces gas into the pre-mixing pipe of the burner. The flow rate adjustment system, in order to function optimally, has to keep the combustible gas supply pressure constant. It is likewise known that with a calibrated nozzle the only system to vary the flow rate and therefore the caloric power of a burner is to change the feed pressure.

Normally in the simpler gas appliances for domestic use, special cocks are used which have two nozzles with different inner diameters and three fixed positions: closed, maximum flow rate nozzle, minimum flow rate nozzle.

Likewise, there are portable or especially simple gas appliances that are directly connected to a gas container (generally LPG) where the only cut-off and adjustment element is a particularly sensitive cock, which by means of a manual knob acts directly on the valve of the cock itself and adjusts the flow rate of the gas directed to the burner. In the latter case, however, as there are no systems to stabilize the feed pressure and considering that the LPG in the container may have even considerable variations in pressure due to various causes (such as heat transmitted by effect of combustion, shaking the container with liquid spilling out and gasification after the calibrated nozzle-reduction of the liquid contained therein, cooling by effect of vaporization of the liquid, etc.) it is clear that adjustment and stabilization of the caloric power is precarious. Furthermore, in these appliances, since connection to the container is direct, gas is at a high pressure (0.5-4 bar) and operation, besides being especially noisy, may be a hazard if the container is accidentally overturned. The liquid gas entering the calibrated nozzle gasifies at the outlet and therefore the quantity of gas flowing to the burner is considerably greater than the quantity that is normally necessary for normal combustion, with the effect of giving out particularly dangerous tongues of flame from the burner.

Therefore, it is an object of the invention to provide a gas cock integrated with a self-controlled adjustment system which, by interacting with the valve of the cock, enables adjusting/stabilizing outlet pressure also according to the changes of gas pressure in the container. Moreover, any accidental overturning of the container is no longer a hazard, as gasification occurs after the valve of the system (before the calibrated valve) and causes the pressure to increase immediately thus bringing about automatic closure.

Another object of the invention is to provide a cock for gas complete with means for adjusting/stabilizing outlet pressure which has a relatively simple and compact structure on account of a rational combination of components and in particular of the concentric arrangement of the valve and of the means for measuring pressure.

For this purpose, the present invention proposes a gas cock as claimed in claim 1.

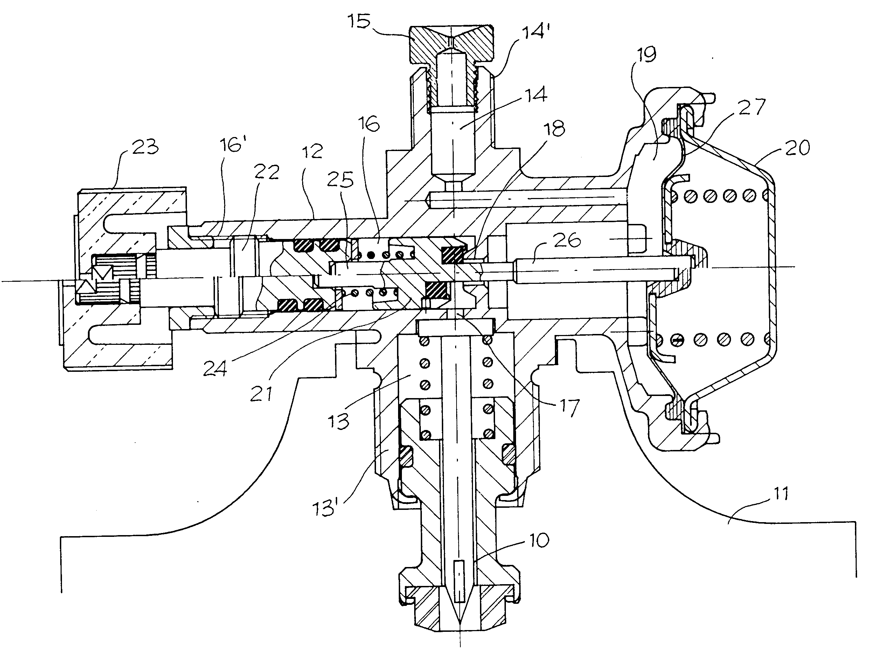

Further details of the invention will however become apparent from the continuation of the description made with reference to the accompanying drawing in which the only figure represents a sectional view of a cock applied directly onto a gas container, partly in closed position and partly in open position.

The example of the cock described herein is the type fitted with a perforating unit 10 for application thereof onto a gas cartridge 11 for portable gas combustion appliances, even though the pressure adjustment/stabilization system according to the invention is applicable to any other configuration of cock needing such a specific function.

This being stated, the cock comprises a body 12, having, on the one side, an inlet hole 13 defined by an inlet union 13' which is connected to a source of gas such as the cartridge 11 and, on the other side, an outlet hole 14 defined by a delivery union 14'. The perforating unit 10 is fitted in the inlet hole 13 when requested; at least one nozzle 15 is applied to the outlet hole 14 to deliver the gas to a burner - not illustrated.

The body 12, preferably, in an orthogonal direction to the axes of the unions 13', 14', comprises a chamber 16 communicating with the inlet hole 13 through a radial passage 17 and with the outlet hole 14 through an intermediate passage 18, on the axis of the chamber 16, and a stabilization chamber 19 located between said intermediate passage and the outlet hole 14. This chamber 19 is also on the axis of the chamber 16; it is defined by one end of the body 12 in combination with an end cap 20 fixed onto the end itself.

A movable valve 21 is guided in the chamber 16 to open and close the intermediate passage 18 and set the inlet hole 13 in, or not in, communication with the gas outlet hole 14. For opening and closing movements, the valve 21 is controlled by means of a pin 22 which screws into a threaded portion 16' of the chamber 16 and which is equipped with a handwheel 23 for gripping and manual control. The control pin 22 and valve 21 are not rigidly fixed one to another, but through an elastic means and with the possibility of reciprocal axial sliding depending on compression or expansion of the elastic means. For this purpose, a contrasting spring 24 is provided between control pin 22 and valve 21 and the pin and valve are coupled movably by means of an axial shank 25 for longitudinal guide of the one with respect to the other.

The valve 21 is likewise fitted with a rigid connecting stem 26 which freely extends into the intermediate passage 18 and as far as the adjustment/stabilization chamber 19 where the stem is constrained to the centre of a diaphragm 27 whose outer edge is locked between the end of the body 12 and the end cap 20 fixed thereto. Said diaphragm 27 acts as an element measuring the pressure of the gas from the intermediate passage 18 and directed to the outlet hole. The diaphragm 27, on account of the connecting stem 26, moves together with the valve 21, both when it is hand controlled by the handwheel through the contrasting spring 24 and when the diaphragm moves in response to the pressure of the gas directed to the outlet hole 14. The diaphragm 27 is moreover stressed by a spring 28, adequately calibrated, acting in opposed direction to the thrust of the gas on the diaphragm itself and of the contrasting spring 24 on the valve 21.

In practice, the above described cock comprises a single valve 21 with the dual function of cut-off and adjustment system for the flow of gas between the inlet 13 and the outlet 14. When the handwheel control 23 is turned it acts on the valve, through the contrasting spring 24, and on the diaphragm 27, stressed by the reaction spring 28. Then, in an initial section of the movement towards closing, the outlet pressure decreases, while in the final section the handwheel presses directly onto the valve thus moving it until it closes the passage of the gas. When the valve is open, the possibility of any simultaneous movement of the valve and of the diaphragm enables adjusting the pressure of the outflowing gas automatically and in a particularly "fine" manner. Moreover, changes concern the pressure alone and not the flow rate (as nozzle flow rate Q = pressure x surface area).

In other words, the diaphragm which moves in response to the pressure of the gas from the supply source acts directly on the valve for corresponding adjustment of the pressure and consequently of the flow through the nozzle.

## Claims

1. A gas cock comprising a body (12) with a gas inlet hole (13) and a gas outlet hole (14) communicating through an intermediate passage (18) which is co-ordinated with a valve (21) for opening/closing controlled manually by a handwheel control (23), **characterized** in that between said intermediate passage (18) and said gas outlet hole an adjustment/stabilization compartment (19) is provided which includes a means (27) for measuring gas pressure rigidly connected and movable together with the valve (21) in response both to manual control made by means of said handwheel control and to the changes in the pressure of the gas flowing from said intermediate passage to the outlet hole, said valve (21) and said means for measuring pressure being concentric.

2. A gas cock as claimed in claim 1, wherein said means for measuring pressure is a diaphragm (27) positioned in said stabilization compartment and peripherally locked, wherein the valve (21) is provided with a stem (26) which extends freely in said intermediate passage (18) and which is constrained at the centre of the diaphragm, and wherein said diaphragm is stressed by a reaction spring (28) acting in opposition to the thrust due to the pressure exerted by the gas on the diaphragm itself.

3. A gas cock as claimed in claims 1 and 2, wherein the valve and the handwheel are coupled and can be moved axially the one with respect to the other with a contrasting spring placed in between them.
